Europäisches Patentamt

European Patent Office

Office européen des brevets

(11) Publication number: **0 416 927 A2**

# EUROPEAN PATENT APPLICATION

(21) Application number: **90309781.4**

(51) Int. Cl.5: **H04N 1/46**

(22) Date of filing: **06.09.90**

(30) Priority: **08.09.89 JP 231661/89**
**08.09.89 JP 231662/89**
**08.09.89 JP 231663/89**

(43) Date of publication of application:
**13.03.91 Bulletin 91/11**

(84) Designated Contracting States:
**DE FR GB**

(71) Applicant: **KONICA CORPORATION**

**26-2, Nishi-shinjuku 1-chome Shinjuku-ku**
**Tokyo(JP)**

(72) Inventor: **Sato, Taxay, c/o Konica Corporation**
**1, Sakuramachi**
**Hino-shi, Tokyo(JP)**

(74) Representative: **Senior, Alan Murray et al**
**J.A. KEMP & CO 14 South Square Gray's Inn**
**London WC1R 5EU(GB)**

(54) Image reader and color separation device.

(57) Disclosed is an image reader for reading a color image by color separation, comprising;
an image pick-up sensor having a plurality of line sensors respectively corresponding to separated colors,
an image-forming lens system and
a color separation device comprising a reflector element comprised of a dichroic mirror and a total reflecting mirror which are laminated interposing a transparent layer, wherein
the color separation device is provided between the image pick-up sensor and the image-forming lens system.

FIG. 1

# IMAGE READER AND COLOR SEPARATION DEVICE

## BACKGROUND OF THE INVENTION

This invention relates to an image reader, and more particularly to an improvement of a color separation device used in an apparatus for reading a color image by color separation.

An apparatus for reading a color image by color separation is widely known to commonly include an apparatus of the type wherein a dichroic beam splitter is provided behind an image forming lens system, a color image is separated into the three primary colors by means of the dichroic beam splitter, and the respective three primary colors are read with individual sensors.

In the apparatus in which the three primary colors are separated to three directions like this, however, each dichroic surface and an image pick-up sensor corresponding thereto must be accurately aligned with each other so that focal points, magnifications, warpage of sensor surfaces and so forth can be corrected. Thus, a problem may arise such that complicated operations for adjustment must be carried out for each of the three primary colors, resulting in the high cost of the apparatus.

Now, for example, Japanese Unexamined Patent Publication No. 234106/1987 discloses an apparatus that can simplify the alignment of sensors as in the above. It proposes an apparatus of the type in which colors are separated into parallel rays of light, using a beam splitter comprising a plurality of dichroic films which are laminated interposing a transparent layer and the light is received by an image pick-up sensor equipped with a plurality of line sensors in an integral form. According to such constitution, a sensor equipped with a plurality of line sensors in an integral form is used, and hence it is one sensor that must be aligned, so that operations for adjustment can be simplified because of a decrease in the number of the sensors.

However, the lamination of a plurality of dichroic films with a transparent layer interposed between them as mentioned above makes it necessary for a plurality of transparent films to be controlled in the range of from 100 to several hundred $\mu$m. This requires a very complicated manufacturing technique, bringing about the problems of an increase in the production cost.

In this regard, what is disclosed in Japanese Unexamined Patent Publication No. 134556/1985 comprises a total reflection mirror and a dichroic film which are laminated interposing a relatively thick transparent layer, and hence the manufacturing technique can be simplified when compared with the above apparatus disclosed in Japanese Unexamined Patent Publication No. 234106/1987 in which a plurality of thin dichroic films are laminated. In this apparatus, however, colors are separated into parallel rays of light in front of an image forming lens system, and hence the image forming lens system must be provided for each of the separated colors so that images can be respectively formed on light-receiving surfaces of image pick-up sensors.

The apparatus as disclosed in Japanese Unexamined Patent Publication No. 134556/1985, in which colors are separated through a color separation device, will be discussed below in more detail. This apparatus is comprised in the manner that a color image is separated into the three primary colors by means of a color separation device comprising a dichroic mirror and so forth so that the image is read for each color of the three primary colors.

The color separation device in the above apparatus specifically comprises a combination of two sheets of reflector elements comprised of a dichroic mirror and a total reflecting mirror respectively formed on the both sides of a transparent plate, where the first reflector element separates only one color of the three primary colors and the second reflector element separates the remaining two-color mixed light into two colors. The color image is finally separated into parallel rays of light of the three primary colors.

In the above constitution, however, in which the layers for the dichroic mirror and the total reflecting mirror are formed on the both sides of a transparent plate as described above, the thickness of the transparent plate must be made small if the distance between the parallel light rays having been separated are made narrow under the same incident angles, and making small the thickness of the transparent plate tends to cause warpage of the reflector element.

In addition, in the case when the two sheets of reflector elements are used in combination as described above, the two sheets of the reflector elements must be respectively aligned for the purpose of adjustment of angles or the like. This requires complicated operations for the adjustment.

There is an additional problem that, because of the difference in mediums between the both sides of a dichroic mirror layer, e.g., one of which is air and the other of which is glass, the light made obliquely incident is refracted when passes through the dichroic mirror layer, resulting in a great difference in chromatic aberration.

Another problems may also arise such that, when the two sheets of reflector elements are so disposed that their reflective surfaces may cross at right angles, thereby separating a color image into the three primary colors, the deviations of focal positions due to the differences in length of light paths do not become linear, and hence each color can not be received at the focal position in the case of a sensor equipped with line sensors in an integral form which correspond respectively to the three colors.

Thus, there are problems that the image forming lens systems and image pick-up sensors which are provided for each of the separated colors make an apparatus large in size, and also makes it necessary to carry out alignment for each image forming lens system and each image pick-up sensor, resulting in complicated adjustment steps for alignment and so forth.

As discussed in the above, conventional image readers have had the problem that a complicated technique is required for the manufacture of a color separation device, or that an image-forming lens system and an image pick-up sensor are required for each separated color even if an image reader is equipped with a color separation device simply comprised of a combination of a dichroic mirror with a total reflecting mirror

## SUMMARY OF THE INVENTION

This invention was made in view of the above problems. An object of the present invention is to provide an image reader that employs a color separation device capable of being relatively readily manufactured, and that does not make the image reader large in size and yet has minimized the points at which operations for adjustment such as alignment are required.

Another object of the present invention is to provide a color separation device that can set the flatness of a reflective surface and the positioning of angles in good states, has a small chromatic aberration, and also makes linear the deviations of focal positions due to the differences in length of light paths so that sensors can read the respective separated colors at their focal positions, when colors are separated using two kinds of reflector elements each comprised of a dichroic mirror and a total reflecting mirror which are laminated interposing a transparent layer.

This invention provides an image reader which is an apparatus for reading a color image by color separation, comprising;
an image pick-up sensor having a plurality of line sensors respectively corresponding to separated colors,
an image-forming lens system and

a color separation device comprising a reflector element comprised of a dichroic mirror and a total reflecting mirror which are laminated interposing a transparent layer, wherein
said color separation device is provided between said image pick-up sensor and said image-forming lens system.

In the above, the color separation device may comprise two kinds of reflector elements, where the two kinds of reflector elements separate the color image into the three primary colors, and on the other hand the image pick-up sensor may be equipped with three line sensors in an integral form which correspond respectively to the three primary colors so that an image can be read for each of the three primary colors.

Transparent layers that constitute the two kinds of reflector elements may preferably have the same thickness.

As a first preferred embodiment of the present invention, the color separation device used in the above image reader comprises;
a column-like prism having a parallelogramic transverse section in which an included angle $\theta$ of its interior angles is $0° < \theta < 90°$; and
reflector elements provided in pair on both of opposed sides of said prism, respectively, and each comprising a dichroic mirror, a transparent layer and a total reflecting mirror which are provided in this order from the prism;
the light to be color-separated being made incident at an angle of incidence $\theta$ on one of reflective surfaces of said reflector elements.

In the above embodiment, the transparent layer may preferably be formed of a material having substantially the same refractive index as said prism.

As a second preferred embodiment of the present invention, the color separation device may comprise;
a column-like prism having a quadrangular transverse section in which its interior angles are $\theta$, $2\theta$, $\theta$ and $360° - 4\theta$ in order, and $0° < \theta < 90°$; and
reflector elements provided in pair on two adjacent sides, respectively, that form an included angle $2\theta$ of said prism, and each comprising a dichroic mirror, a transparent layer and a total reflecting mirror which are provided in this order from the prism;
the light to be color-separated being made incident at an angle of incidence $\theta$ on one of reflective surfaces of said reflector elements.

In the above embodiment, the angle $\theta$ may be 45° so that the column-like prism having a quadrangular transverse section may actually be the one having a triangular transverse section. In this embodiment also, the transparent layer may preferably be formed of a material having substantially the same refractive index as said prism.

BRIEF DESCRIPTION OF THE DRAWINGS

Fig. 1 is a front view to illustrate a first example of the present invention;

Fig. 2 illustrates an arithmetic operation of the differences in length of light paths in a color separation device shown in Fig. 1;

Fig. 3 is a front view to illustrate a second example of the present invention;

Fig. 4 illustrates an arithmetic operation of the differences in length of light paths in a color separation device shown in Fig. 3;

Fig. 5 is a front view to illustrate a third example of the present invention;

Fig. 6 is a front view to illustrate a fourth example of the present invention;

Figs. 7 to 9 each illustrate the relationship between the thickness of a transparent layer and the distance between emergent rays;

Figs 10 and 11 are graphs each illustrating separation wavelength characteristics in three-color separation;

Figs 12 to 17 each illustrate a pattern of three-color separation;

Fig. 18 illustrates a color separation device used in four-color separation;

Figs. 19 and 20 are graphs each illustrating separation wavelength characteristics in five-color separation;

Fig. 21 illustrates the constitution of a color separation device used in five-color separation; and

Figs. 22 to 26 are front views to illustrate fifth to ninth examples of the present invention, respectively.

DESCRIPTION OF THE PREFERRED EMBODIMENTS

In the image reader as summarily described above, the color separation device comprises a reflector element comprised of a dichroic mirror and a total reflecting mirror which are laminated interposing a transparent layer. Only light with a given wavelength is reflected on the dichroic mirror to effect color separation, and on the other hand the light having passed through the dichroic mirror is totally reflected on the total reflecting mirror, so that a set of reflector element separates a color image into two colors. Such a color separation device is disposed between an image pick-up sensor having a plurality of line sensors corresponding to the colors separated by means of the color separation device (which includes a sensor comprised of a plurality of line sensors provided in a two-dimensional sensor) and an image-forming lens system. An image is thus formed on the image pick-up sensor for each separated color.

Hence, if the color separation device are equipped with two kinds of reflector elements, one reflector element can separate colors into blue and yellow and the other reflector element can separate yellow into red and green, so that colors can be separated into the three primary colors of red R, green G and blue B. Thus, the image pick-up sensor may be so designed as to be equipped with three line sensors in an integral form which correspond respectively to the three primary colors, so that an image for each of the three primary colors can be read.

In the case when two kinds of reflector elements are provided so that colors can be separated into the three primary colors as described above, the transparent layer that constitutes each of the two kinds of reflector elements may be made to have the same thickness, whereby the color separation devices can be manufactured with ease because of the common thickness of their transparent layers and also the light having been color-separated can be made parallel with equal distance between rays.

According to a first preferred embodiment of the color separation device having the above constitution, a color separation device comprises a prism formed in a column whose transverse section is parallelogramic. In such a parallelogramic transverse section, an included angle $\theta$ of its interior angles is $0° < \theta < 90°$. Reflector elements are provided in pair on both of opposed sides, respectively, of the prism having such a parallelogramic transverse section and each have a dichroic mirror layer, a transparent layer and a total reflecting mirror which are provided in this order from the prism. In such a color separation device, the light to be color-separated is incident at the same angle of incidence $\theta$ as the above included angle, on one of reflective surfaces of the reflector elements.

Thus, when the light to be color-separated is made incident on the reflector element at an angle of incidence $\theta$, the light incident from the side of the prism on which no reflector element is formed is incident at right angles with respect to that side of the prism, and the light reflected twice on the reflector elements and color-separated is also emerged at right angles with respect to the other opposed side of the prism.

The transparent layer and the prism are made to have substantially the same refractive index each other, so that the mediums at the back and in front of the dichroic mirror can have substantially the same refractive index and thus the refraction can be prevented when the light is obliquely incident.

According to a second preferred embodiment of the color separation device having the above constitution, a color separation device comprises as a base material a column-like prism having a quadrangular transverse section in which its interior angles are $\theta$, $2\theta$, $\theta$ and $360°-4\theta$ in order. The color separation device also comprises reflector elements provided in pair on two adjacent sides, respectively, that form the above angle $2\theta$ of said prism as an included angle, and each have a dichroic mirror layer, a transparent layer and a total reflecting mirror which are provided in this order from the prism. The light to be color-separated is incident at an angle of incidence $\theta$ on one of the reflector elements.

In the color separation device as described above, when the light to be color-separated is made incident at an angle of incidence $\theta$ with respect to the reflector element, the light incident from either of the two sides that form an included angle of $360°-4\theta$ is incident at right angles with respect to either of those sides, and the light reflected twice on the two sets of reflector elements and color-separated is also emerged at right angles with respect to the other side of the prism.

In the above embodiment, the column-like prism has a quadrangular transverse section. If the angle $\theta$ is made to be $45°$, $360°-4\theta$ makes $180°$. Thus, the prism can actually be the one having a triangular transverse section. In this embodiment also, the light which is incident on and emergent from the prism falls at right angles with the sides of the prism.

The transparent layer and the prism are also made to have substantially the same refractive index each other, so that the mediums at the back and in front of the dichroic mirror can have substantially the same refractive index and thus the refraction can be prevented when the light is obliquely incident.

The present invention will be described below by giving specific examples.

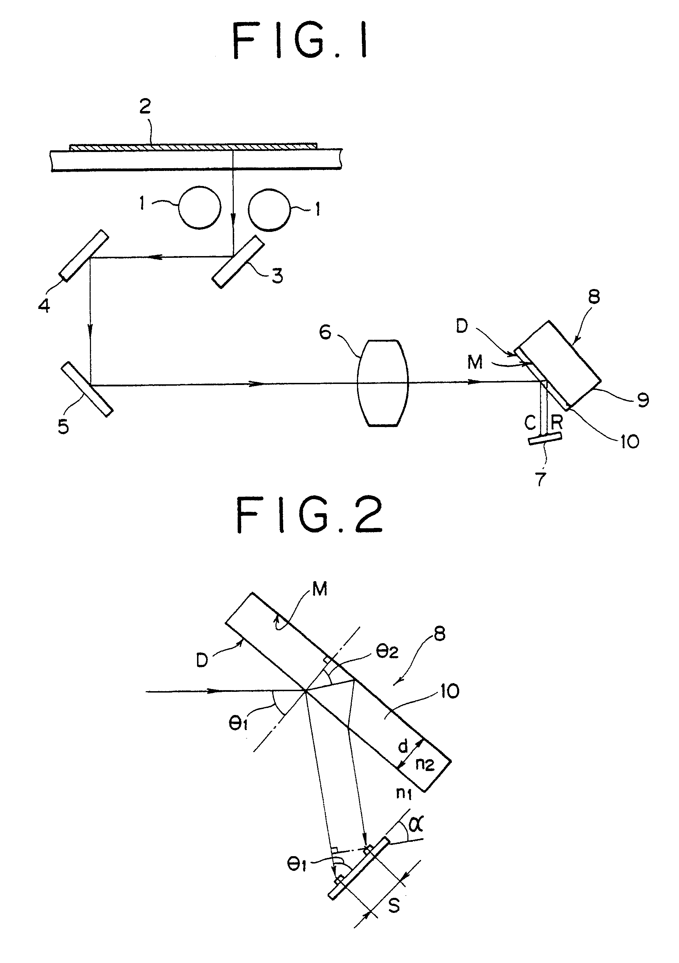

Fig. 1 illustrates a first example, in which an illuminant source 1, a pair of tube lamps provided in the longitudinal direction corresponding to the direction falling at right angles with the drawing, illuminate a color original 2 in a slit form. The slit color image is reflected on a plurality of total reflecting mirrors 3 to 5, changed in its direction in that course, and led to an image-forming lens 6. The slit image of the color original 2 is so designed as to be formed on a CCD line sensor 7 through this image-forming lens 6. Here, a color separation device 8 is provided between the image-forming lens 6 and the CCD line sensor 7. This color separation device 8 separates the incident image into two-color parallel rays of light. The light rays separated into two colors here are respectively image-formed on two line sensors provided in parallel on the CCD line sensor 7.

The above color separation device 8 comprises a plate-like prism 9 of 5 mm thick, and a reflector element comprised of a total reflecting mirror surface M formed on one side of the prism by vacuum deposition of aluminum, a transparent layer 10 (refractive index: 1.5) of 157 $\mu$m thick formed on the total reflecting mirror surface M by coating of a transparent polyimide or the like, and, further provided thereon at a standard angle of incidence of $45°$, a dichroic mirror D parallel to the total reflecting mirror M, capable of reflecting wavelengths of 550 nm or shorter and passing wavelengths longer than that. Thus, the color image incident on the reflector element of the color separation device 8 is separated into colors reflected on the dichroic mirror D, and colors passing through the dichroic mirror D and thereafter being reflected on the total reflecting mirror M.

In order to detect the respective light images separated into two colors by means of the above color separation device 8, the CCD line sensor 7 is provided with two line sensors in parallel at given spaces, having color filters corresponding to the respective colors. The line sensors are so disposed as to be positioned at the positions at which the respective light rays form images, so that the two-color images of the color original 2 can be respectively read.

Incidentally, there are obtained two-color parallel light rays color-separated using the color separation device 8. As shown in Fig. 2, however, a difference in light path length is produced between the light reflected on the dichroic mirror D and the light reflected on the total reflecting mirror M. For this reason, if the CCD line sensor 7 is so disposed as to fall at right angles with the parallel light rays so that the light of the respective two colors can be received on the same plane, it is impossible for the both light rays to be received together at their focal positions. Hence, in order for them to be focused on the both focal positions, it is necessary to dispose the CCD line sensor 7 at an inclination with respect to the standard direction falling at right angles with the parallel light rays.

Now, when the space between the two line sensors of the CCD line sensor 7 is represented by $S$ (168 $\mu$m in the present example) and the angle of incidence with respect to the color separation device 8 by $\theta_1$, the above difference in light path length can be expressed by: difference in light path length = $S \cos \theta_1$, and the angle $\alpha$ at which the CCD line sensor 7 is inclined with respect to the parallel light rays can be expressed by: $\alpha = 90° -\theta_1$. Thus, the difference in light path length or the

sensor inclination angle $\alpha$ can be determined without dependence on the refractive index $n_1$ of the transparent layer 10 or the refractive index $n_2$ of an air layer. When a thickness d for obtaining parallel light rays with the desired distance is determined on the basis of the above line space S, it can be expressed by:

$$d = \frac{S}{2} \times \frac{\tan\theta_1}{\tan\theta_2}$$

In the above, $\theta_2$ represents a refractive angle at the time light is incident on the transparent layer 10 from the air layer. If the angle of incidence $\theta_1$ is 45°, it follows that the CCD line sensor 7 may be disposed at an inclination of 45° with respect to the parallel light rays.

In the above example, the CCD line sensor 7 is fitted with a cover glass in reality, which is made to have a thickness of 100 $\mu$m. This is for the reasons that the thickness of the cover glass should be as small as possible so that the chromatic aberration due to oblique incidence can be prevented when the sensor is disposed with inclination as described above, and should be not more than 1 mm, and preferably not more than 100 $\mu$m.

Thus, according to the above first example of the present invention, the color separation device 8 comprises a reflector element comprised of the dichroic mirror D formed on the total reflecting mirror M, interposing a layer of transparent layer 10, so that the device can be produced relatively with ease, compared with the case when thin transparent layers 10 are laminated in plurality and dichroic mirrors D are provided in plural layers. In addition, since the two-color separated light rays are detected by the two line sensors, respectively, provided on one CCD line sensor 7 in an integral form, the positions of sensors may be adjusted only on one CCD line sensor 7. This can simplify the steps for positional adjustment of sensors. Moreover, since two color images can be respectively formed using one image-forming lens 6 and it is unnecessary to provide image-forming lens 6 for each separated color, the component parts can be reduced and the apparatus may not have a large size. Furthermore, since only one image-forming lens 6 and only one CCD line sensor 7 are used, the adjustment of their positions can be simply operated.

The color original 2 may be scanned either by moving the color original 2 or by moving an optical system for the image reader.

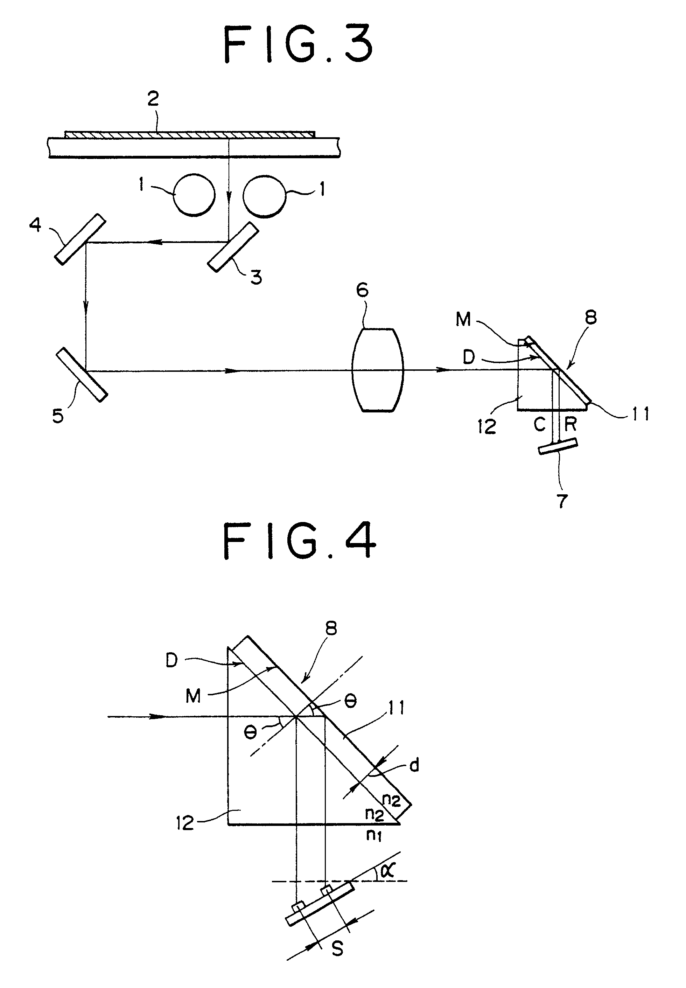

Next, Fig. 3 illustrates a second example of the present invention, in which the apparatus has the same basic constitution as the apparatus shown in Fig. 1, except that the color separation device 8 has a different form. Accordingly, the same components as those in Fig. 1 are designated by the same numerals, and descriptions thereon are omitted.

The color separation device 8 in the second example shown in Fig. 3 comprises a reflector element comprised of a glass sheet 11 of 97 $\mu$m in sheet thickness, a total reflecting mirror M formed on one side of the glass sheet by vacuum deposition of aluminum, and a dichroic mirror D formed on the side corresponding to the major side of the transverse section of a column-like prism 12 having a right-angled isosceles triangular transverse section. The opposite surface of the total reflecting mirror M attached to said glass sheet 11 is adhered to the dichroic mirror D by the use of an UV-(ultraviolet)-curable resin (an adhesive layer of 2 $\mu$m thick) to form a transparent layer of 99 $\mu$m thick (refractive index: 1.5). In the color separation device 8 thus constituted, a light image incident on the prism 12 is separated into two colors, one of which is reflected on the dichroic mirror D and the other of which is passed through it and reflected on the total reflecting mirror M, and the light is again passed through the prism and received on a sensor 7.

Now, assume that the space S of two line sensors provided in the CCD line sensor 7 is 168 $\mu$m, the sensor 7 may be disposed at an inclination of 33.7° with respect to the parallel light rays separated into two colors when the difference in light path length is taken into account as previously described, so that the line sensors can be disposed at the focal positions for the respective two colors. The reasons why such an angle of inclination is set will be described below with reference to Fig. 4.

When the refractive index of an air layer is represented by $n_1$; the refractive index of the prism, $n_2$; the angle of incidence with respect to the dichroic mirror D, $\theta$; and the angle at which the sensor 7 is fitted, $\alpha$,

$$\tan \alpha = \frac{1}{\tan \theta} \times \frac{n_1}{n_2}$$

and the difference in light path length can be expressed by: difference in light path length = S sin $\alpha$ = 2 d cos $\theta \times n_1/n_2$. Assume that the angle of incidence $\theta$ with respect to the dichroic mirror D is 45°, tan $\alpha$ = $n_1/n_2$ and difference in light path length = S sin $\alpha$ = $2^{1/2}$ d $\times n_1/n_2$. Hence, when $n_1$ = 1 and $n_2$ = 1.5, $\alpha$ is about 33.7°, so that an optimum value of the transparent layer thickness is about 99 $\mu$m when based on the line space S (= 168 $\mu$m). Thus, the transparent layer is controlled to have a thickness of 99 $\mu$m as described above.

The reason why the transverse section of the prism 12 is right-angled isosceles triangular is that the light incident at right angles with respect to the prism 12 may not be refracted when the angle of incidence with respect to the dichroic mirror D is set to be 45°.

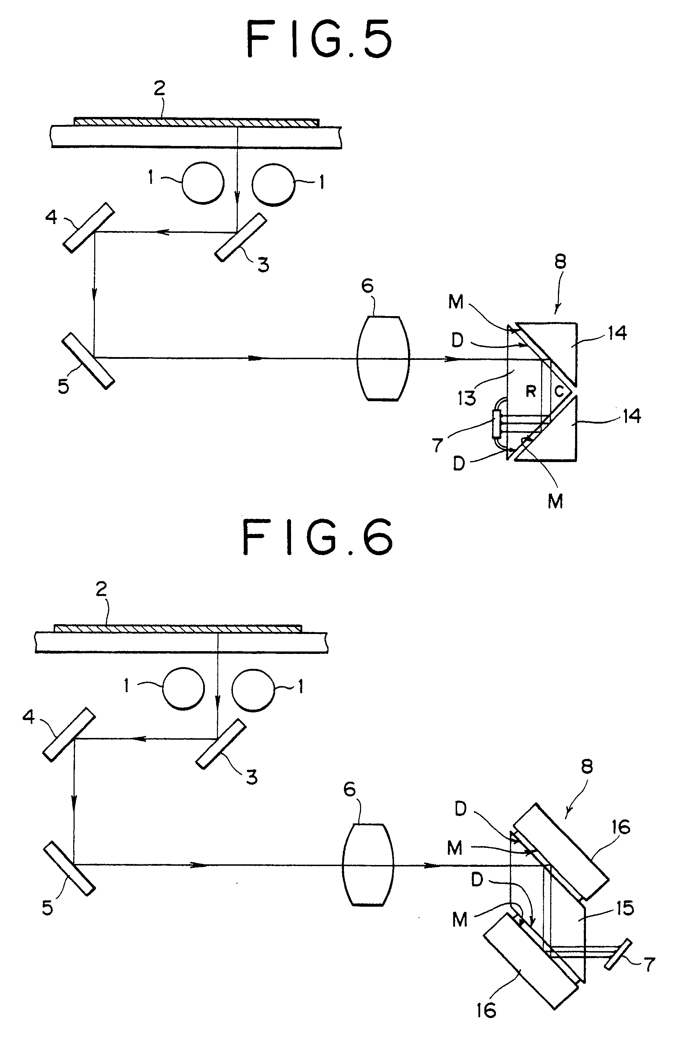

Fig. 5 illustrates a third example of the present invention, in which the apparatus is so designed that a color image can be separated into the three primary colors by means of a color separation device 8, and, corresponding thereto, a CCD line sensor 7 comprises three line sensors provided in equal spaces, having the respective color filters.

The color separation device 8 comprises a right-angled isosceles triangular column-like prism, and dichroic mirrors D formed respectively on both sides of the prism between which the right-angled ridgelines are formed. It also comprises two right-angled isosceles triangular column-like prisms 14 having substantially equal bottom sides, provided respectively on the sides on which said dichroic mirrors D are formed, total reflecting mirrors M formed respectively on the bottom sides of these column-like prisms 14, where the prisms 13 and 14 are adhered to each other in such a way that each total reflecting mirror M faces the surface of each dichroic mirror D in parallel with a given space (i.e., a given transparent layer thickness). These prisms are adhered interposing spacers formed to have a thickness corresponding to the given space. Thus, reflector elements each comprised of the dichroic mirror D and the total reflecting mirror M which are laminated interposing the transparent layer with a given thickness are disposed at an angle of nip of 90° on the dichroic mirror D sides. In this example also, when the angle of incidence with respect to the dichroic mirror D is set to be 45°, the angle of incidence with respect to the prism comes to be 90°, and hence the light can be prevented from being refracted when it is incident on the prism.

Here are used transparent beads of 110 $\mu$m in diameter as the spacer. The beads may be provided between the plural dichroic mirrors D and total reflecting mirrors M, keeping out of the light path, whereby the gaps between them can be controlled. The gaps may be filled with a UV-curable resin in that state so that the transparent layers are formed.

In the present example, the dichroic mirrors D are provided on the two sides. The dichroic mirror D on which the light is first incident may be a dichroic mirror having the properties of reflecting red and passing cyan, and the other mirror may be a dichroic mirror having the properties of reflecting blue and passing yellow, so that the image separated into red and cyan through the dichroic mirror D that reflects red and passes cyan falls on the next dichroic mirror D, where blue is reflected from cyan and the remaining green is reflected on the total reflecting mirror M. Thus, the colors can be separated into the three primary colors, red, green and blue. In the present example, a CCD line sensor 7 equipped with three line sensors at equal spaces, having color filters respectively corresponding to the three primary colors is stuck on the prism 13 in an integral form. In this instance, a cover glass of the CCD line sensor 7 can be omitted.

In the color separation device 8 thus constituted, the ray of light having the longest light path among the light rays separated into the three colors is the middle ray of light (green). The light rays at the both sides have the same light path length. Hence, it is impossible to dispose the CCD line sensor 7 so as for the light rays to be focused on the focal positions of the respective three colors. For this reason, the CCD line sensor 7 must be positioned so as for its sensor elements to be disposed in the vicinity of the middle of the two different focal positions so that the distances to the respective focal positions may be within the focal depth, and on the other hand the difference in light path length must be set so as for the sensor 7 to be set within the focal depth. In the constitution according to the present example, the transparent layer is 119 $\mu$m thick and the angle of incidence is set to be 45°, and therefore the focuses deviate from each other about 112 $\mu$m before and behind the focal positions. Then, the sensor 7 may be disposed at the middle point thereof, whereby the sensor elements can be disposed at the position within ± 56 $\mu$m from the focal positions. Thus, the sensor can be disposed within the focal depth.

Fig. 6 illustrates a fourth example of the present invention. In the above third example, the reflector elements comprising two dichroic mirrors D are disposed at right angles with each other so that the color image can be separated into the three primary colors. In the present example, reflector elements comprising two dichroic mirrors D are so disposed as to face each other in parallel so that a color image can be separated into the three primary colors by means of such parallel two dichroic mirrors D.

The color separation device 8 of the present example comprises a column-like prism 15 having a parallelogramic transverse section set to have an included angle of 45°, and two sets of reflector elements (the first and the second ones) comprised of dichroic mirrors D formed respectively on the opposed both sides of the prism, and total reflecting mirrors M each formed on one side of a plate-like prism 16. The both prisms 15 and 16 are adhered interposing a spacer having a given thickness, between each dichroic mirror D and each total reflecting mirror M. Thus, the dichroic mirrors D are so disposed as to face each other in parallel at a given distance and the total reflecting mirrors M are provided on the outer sides of the dichroic mirrors D, interposing transparent layers between them, respectively.

The beads as previously described may be used as the above spacers. Alternatively, tungsten wires with a given diameter may also be used. In the present example, tungsten wires of 99 μm in diameter are used as the spacers, keeping out of the light path, so as for each transparent layer to have a thickness of 99 μm in the same manner as in the previous example in which the beads are used. The spaces thus formed are each filled with an UV-curable resin so that the transparent layers are respectively formed between the dichroic mirrors D and the total reflecting mirrors M.

The dichroic mirror D of the first reflector element, on which the light rays of a color image are incident through an image-forming lens 6, reflects cyan and passes red. The dichroic mirror D of the second reflector element, on which the light rays of the image having been separated into cyan and red are incident, reflects blue and passes yellow. The red and the separated cyan are separated into blue and green through the dichroic mirror D of the second reflector element, so that the color image is separated into the three primary colors, red, green and blue, which are then respectively read by three line sensors having he respective color filters provided on a CCD line sensor

In the present example, the CCD line sensor 7 is, in the same manner as in the second example, disposed at an angle of inclination of 33.7° with respect to the direction falling at right angles with the light to be separated. Thus, the light rays can be received corresponding to the differences in light path lengths and also, if the space between the line sensors is 168 μm, the light rays can be received on the line sensors for the respective three primary colors at the distance between separated light rays which is governed by the above 99 μm thick transparent layers.

In the above example, the device in which a color image is separated into the three primary colors by the use of the two sets of reflector elements respectively comprised of dichroic mirrors D and total reflecting mirrors M are so designed that both the reflector elements have their respective transparent layers in the same thickness. The reason why they are provided in the same thickness is that the separated parallel light rays can be emerged at equal distances so that they can be correspondent with the line sensors provided at equal spaces, and also that the device can be manufactured with ease if the size is kept constant. If the difficulty or readiness on the manufacture may not be taken into account, the distances between separated light rays can be made constant even when the thickness d of each transparent layer is not equal.

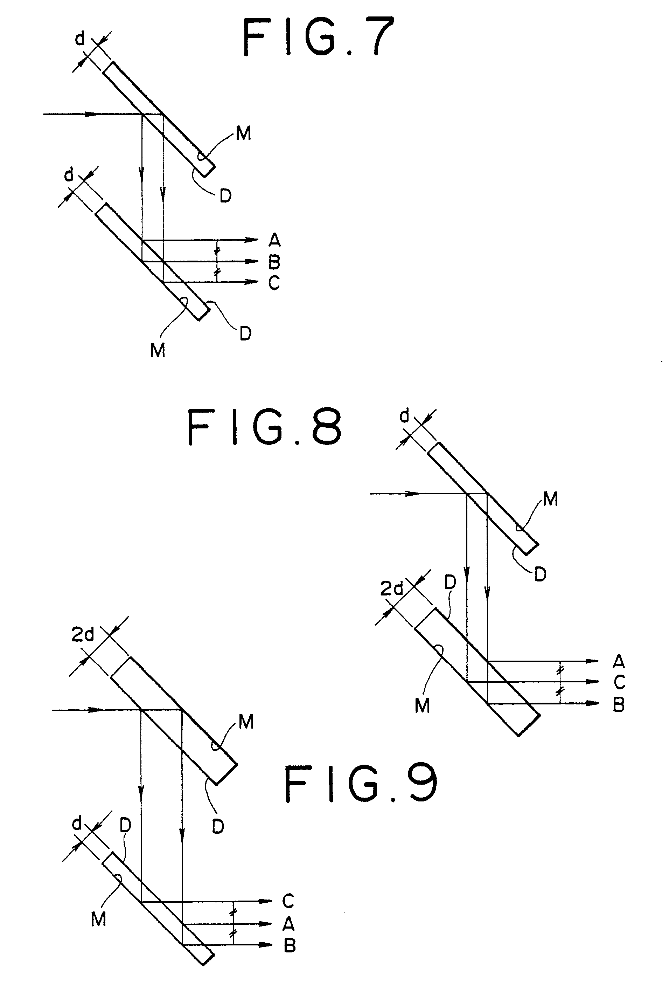

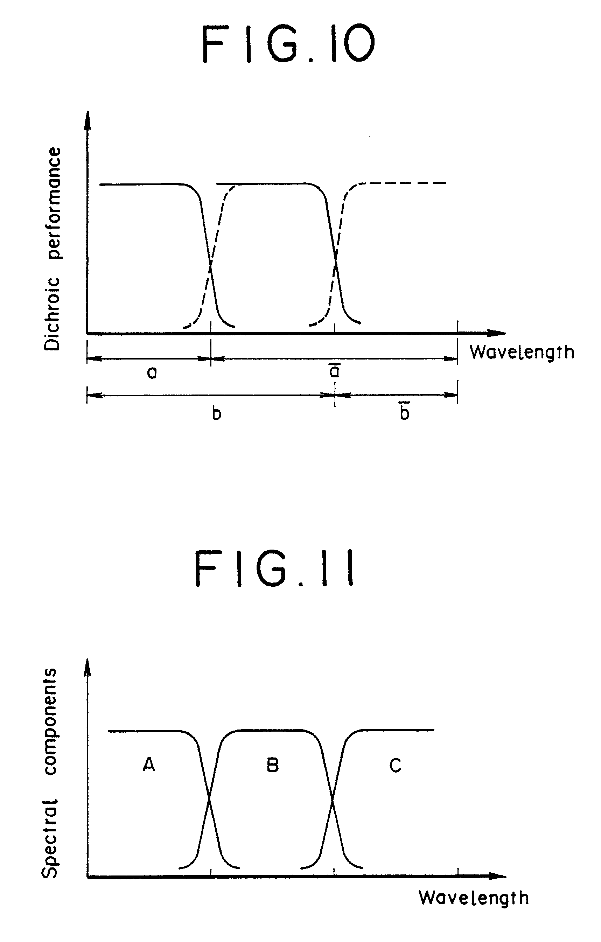

Fig. 7 illustrates an instance in which the transparent layers are formed to have the same thickness d and two sets of reflector elements are disposed in parallel so that a color image can be separated into the three primary colors. First, the dichroic mirror D of the first reflector element is so designed as to pass only the color C on the longer wavelength side (see Figs. 10 and 11) of the three primary colors and reflect the colors A and B having other wavelengths. The dichroic mirror D of the second reflector element is so designed as to reflect only the color A on the shorter wavelength side among the light rays reflected on the dichroic mirror D of the first reflector element so that the color B with the intermediate wavelength can be separated. The respective three primary colors A, B and C can be thus emerged in the form of parallel light rays with equal distances. In Fig. 10, a solid line represents reflection property, and a broken line, transmittance property.

On the other hand, in the color separation devices as shown in Figs. 8 and 9, the separation into the three primary colors A, B and C are carried out using the dichroic mirrors D designed in the same way. In the device shown in Fig. 8, the thickness d of a transparent layer inserted between the dichroic mirror D and total reflecting mirror M of the second reflector element is twice the thickness d of a transparent layer provided on the dichroic mirror D of the first reflector element. Even in such constitution, the three primary colors A, B and C can be emerged at equal distances.

In the color separation device shown in Fig. 8, however, the dichroic mirror D of the first reflector element is so designed as to reflect only the color C. The dichroic mirror D of the second reflector element separates into colors A and B the light passed through the dichroic mirror D of the first reflector element and totally reflected thereon.

Fig. 9 illustrates a device in which the relation of the thickness d of each transparent layer is made reverse to the relation in Fig. 8. The thickness on the side on which the light is first incident is set to be twice that of the other side. In this instance also, the three primary colors can be emerged at equal distances. Here, in the same way as in the color separation device shown in Fig. 8, the dichroic mirror D of the first reflector element is so designed as to reflect only the color C, and the dichroic mirror D of the second reflector element, effect separation into the colors A and B.

As described above, the separated light rays finally emerged can be made equal in their distances if the transparent layers may not necessarily have the same thickness d. This can be also applied in the instance where two sets of color separation devices are disposed at right angles with each other and the direction of a color image from an image-forming lens is reversed (see Fig. 5).

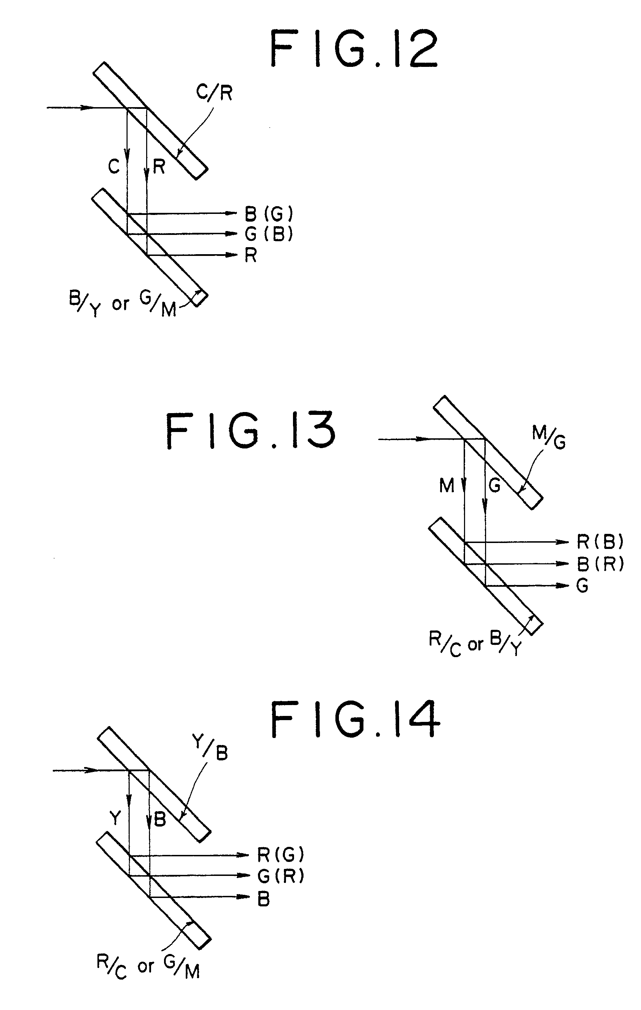

In the case when a color image is separated into the three primary colors by the use of the two sets of reflector elements each comprised of the dichroic mirror D and the total reflecting mirror M which are laminated interposing the transparent layer as in the above example, color separation steps can be designed in plural kinds as shown in Figs. 12 to 17.

In the case shown in Fig. 12, the dichroic mirror D of the first reflector element reflects cyan C and passes red R (in the drawing, the letter before the symbol "/" refers to reflected light, and the letter after it refers to passed light), and hence the second dichroic mirror D may separate blue B or green G from the cyan C reflected. Thus, the one that reflects blue B and passes yellow Y or the one that reflects green G and passes magenta M may be used as the dichroic mirror D of the second reflector element, so that blue B and green G can be separated from cyan C and thus the light separated into the three primary colors can be obtained together with the red R separated through the dichroic mirror D of the first reflector element.

In the case shown in Fig. 13, magenta M is first reflected on the dichroic mirror D of the first reflector element and green G is separated. Hence, the next dichroic mirror D may be so designed as to separate red R or blue B from the magenta M, and the one that reflects red R and passes cyan C or the one that reflects blue B and passes Y may be used as the dichroic mirror D of the second reflector element, so that blue B and red R can be separated from the magenta M.

In the case shown in Fig. 14, yellow Y is first reflected on the dichroic mirror D of the first reflector element and blue B is separated. The dichroic mirror D of the second reflector element may be so designed as to reflect red R and pass cyan C or reflect green G and pass magenta M, so that red R and green G can be separated from the yellow Y.

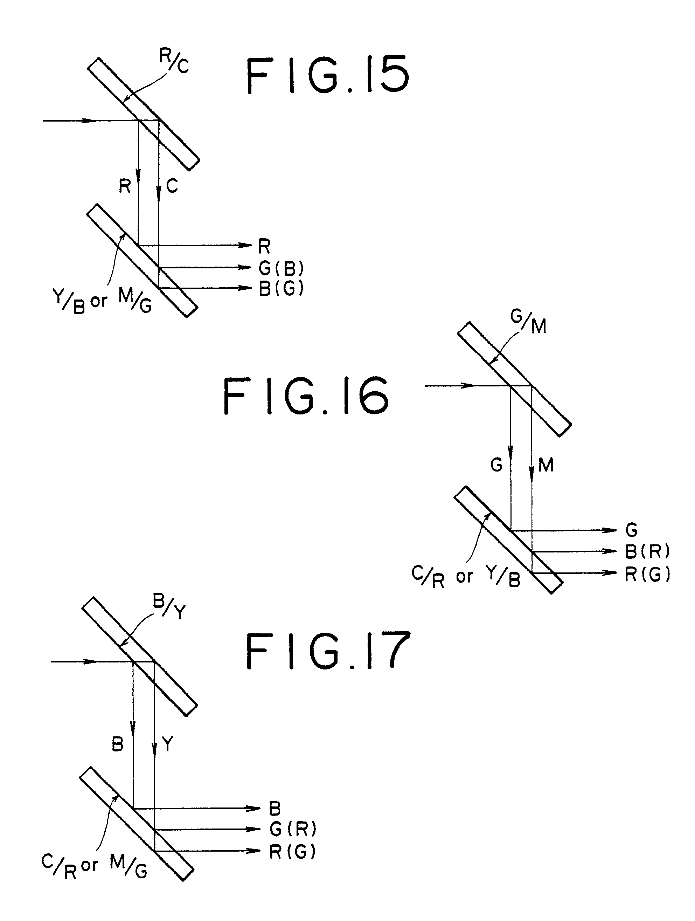

In the case shown in Fig. 15, red R is first reflected on the dichroic mirror D of the first reflector element and cyan C is separated. The dichroic mirror D of the second reflector element may be so designed as to reflect yellow Y and pass blue B or reflect magenta M and pass green G, so that blue B and green G can be separated from the cyan C.

In the case shown in Fig. 16, green G is first reflected on the dichroic mirror D of the first reflector element and magenta M is separated. The dichroic mirror D of the second reflector element may be so designed as to reflect cyan C and pass red R or reflect yellow Y and pass blue B, so that blue B and red R can be separated from the magenta M.

In the case shown in Fig. 17, blue B is first reflected on the dichroic mirror D of the first reflector element and yellow Y is separated. The dichroic mirror D of the second reflector element may be so designed as to reflect cyan C and pass red R or reflect magenta M and pass green G, so that green G and red R can be separated from the yellow Y.

In this way, the dichroic mirrors D can be designed to have properties in various combinations. However, in the dichroic mirror D so designed that the wavelength of green G is a wavelength to be reflected or not reflected, it follows that the green G is of an intermediate wavelength held between red R and blue B and has two, large and small threshold wavelengths, and hence such a device has a separation performance inferior to a device that performs separation at one threshold value. Thus, it is preferred to avoid using the dichroic mirror D so designed as to reflect green G and pass magenta M or reflect magenta M and pass green G.

In the above Figs. 12 to 17 that illustrate plural types of color separation, described are the color separation devices each comprising two sets of reflector elements disposed in parallel. Needless to say, however, the separation properties can be similarly designed in plural kinds when they are disposed at right angles with each other or disposed in any other positional relationship.

In the above examples, two-color separation and three-color separation have been described. Without limitation thereto, it is also possible to carry out four-color separation using three sets of reflector elements comprising a dichroic mirror D and a total reflecting mirror M which are laminated interposing a transparent layer.

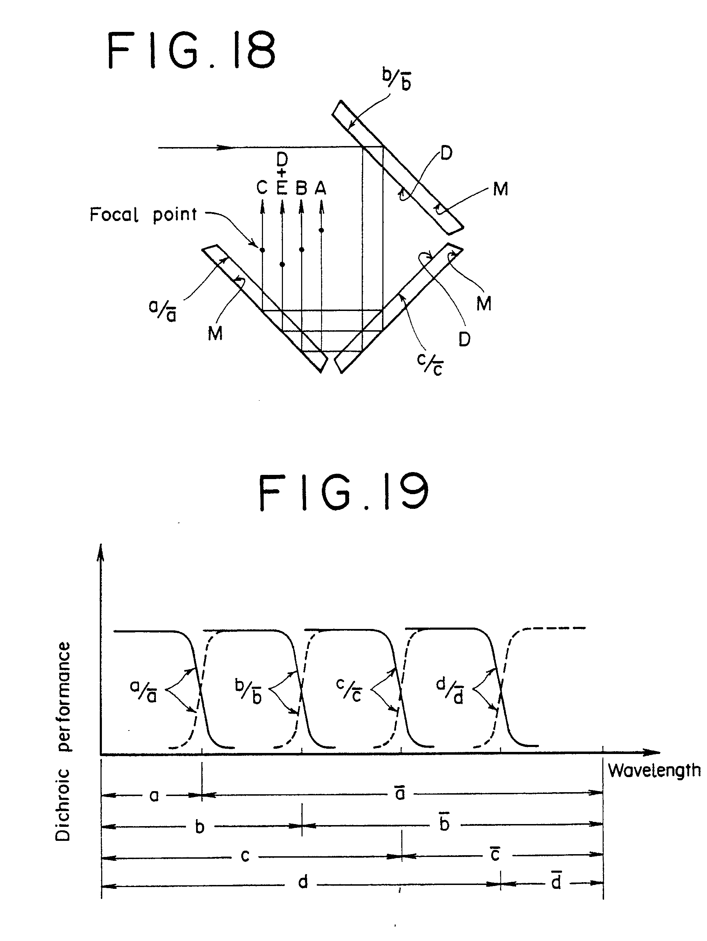

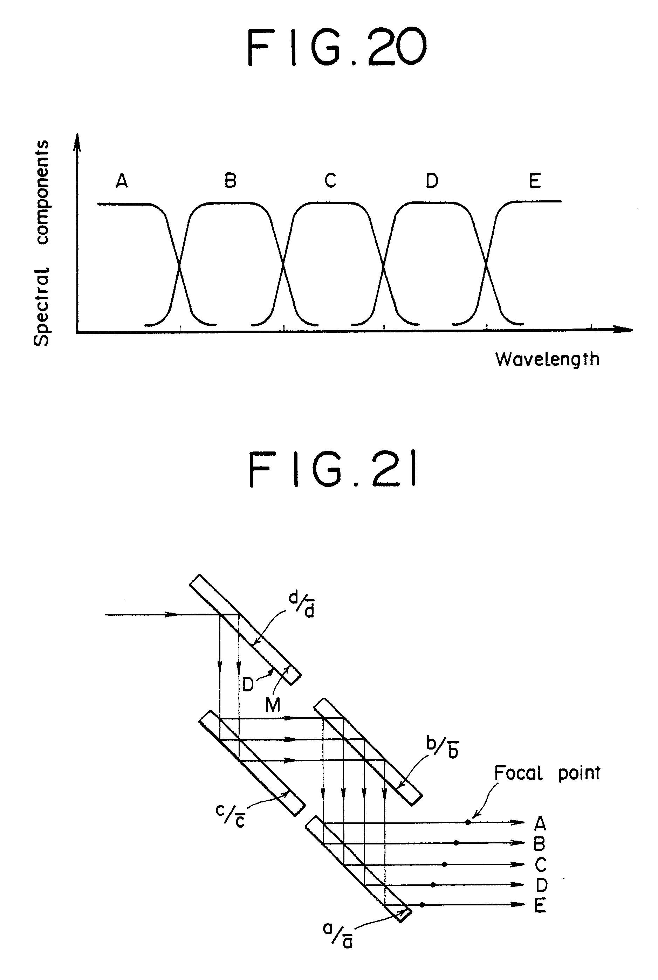

In the color separation device shown in Fig. 18, three sets of reflector elements each comprised of a dichroic mirror D and total reflecting mirror M which are laminated interposing a transparent layer are disposed in a U-shape. Then, only the light of the wavelength region b as shown in the five-color separation characteristic curves illustrated in Figs. 19 and 20 is reflected on the dichroic mirror D of the first reflector element. On the dichroic mirror D of the second reflector element, only the light belonging to the wavelength region c among the wavelengths other than the wavelength region b is reflected so that the color C is separated. Next, on the dichroic mirror D of the third reflector element, only the light belonging to the wavelength region a (color A) among the light of the wavelength region b, reflected on the dichroic mirror D of the first reflector element and totally reflected on the second reflector element, is reflected so that the light is separated into colors A and B. The light of the wavelengths other than the wavelength region c, separated through the dichroic mirror D of the second reflector element, is also reflected on the total reflecting mirror M as it is and is output in the form of the colors of D + E, so that the light is separated into four colors of A, B, C and D + E. In Fig. 19, a solid line represents reflection property, and a broken line, transmittance property.

In the instance where the above three reflector elements are disposed in a U-shape, the focal positions are deviated because of the differences in length of light paths as shown in Fig. 18, and such differences are not linear but frontward-backward irregular. Hence, linear sensors are so disposed as to be positioned at substantially the middle of these focal positions so that the respective four colors can be detected within the focal depth.

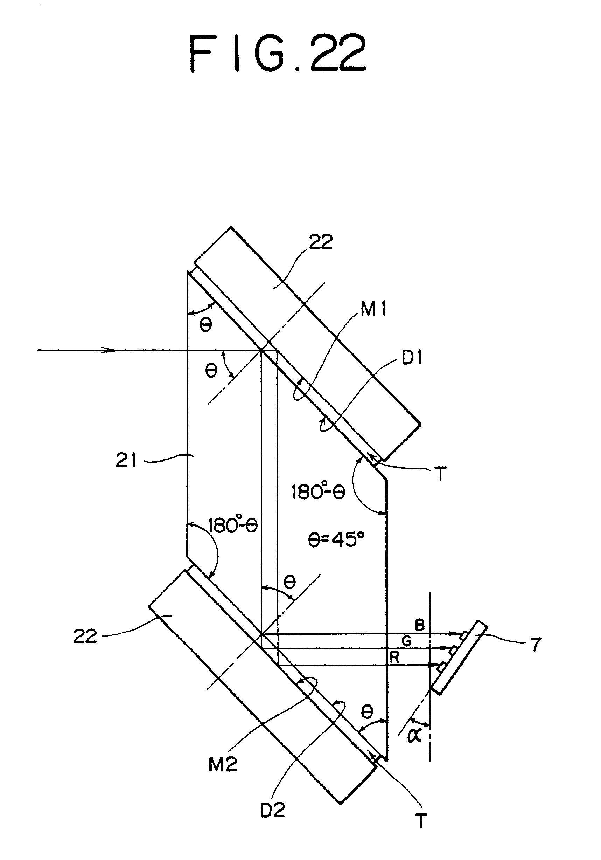

It is also possible to carry out five-color separation using a color separation device equipped with four kinds of reflector elements each comprised of a dichroic mirror D and a total reflecting mirror M which are laminated interposing a transparent layer. As shown in Fig. 21, two kinds of the reflector elements of these that are disposed on the same planes may be disposed in parallel in such a manner that the dichroic mirror D sides of all the reflector elements may face each other.

The process of color separation using the device shown in Fig. 21 will be described with reference to Figs. 19 and 20. In the first reflector element on which the light of a color image is first incident (angle of incidence: 45°), the dichroic mirror D thereof reflects the color of wavelength region d except color E of a longer wavelength, and passes only color E.

The dichroic mirror D of the second reflector element reflects the color of wavelength region c except the wavelength region of color D among the wavelength region d, and passes colors other than it. Hence, colors (color A, color B, color C and color D) of the wavelength region d, reflected on the dichroic mirror D of the first reflector element, are made incident on the dichroic mirror D of the second reflector element, where only colors (color A, color B and color C) of the wavelength region c are reflected, and only color D is passed and totally reflected.

The dichroic mirror D of the third reflector element reflects colors of the wavelength region b comprised of color A and color B, and passes the light other than that, and hence passes only color C among the colors of the wavelength region c (color A, color B and color C) reflected on the dichroic mirror D of the second reflector element.

The dichroic mirror D of the fourth reflector element reflects only the wavelength of color A and passes other wavelengths than that. Hence, it reflects only color A among the colors of the wavelength region b reflected on the dichroic mirror D of the third reflector element, and passed the remaining color B.

In this way, color separation is carried out in the order of color E, color D, color C, color B and color A, so that color separation into five colors can be achieved. In the instance where the reflector elements are disposed in parallel and the light is made alternately incident through the parallel spaces as shown in Fig. 21, the deviation of focal positions because of the differences in length of light paths is inclined in a linear fashion as shown also in Fig. 21. Hence, line sensors may be disposed with a corresponding inclination, so that the respective colors can be detected at their focal positions. In the parallel arrangement of reflector elements as shown in Fig. 21, it is possible to further arrange reflector elements in series to reflect light, and therefore it is even possible to carry out color separation into more than five colors. In the constitution as shown in Fig. 21, a reflector element disposed at right angles with respect to the last reflector element from which the five-color separated light is emerged may also be provided. The manner of arranging the plurality of reflector elements each comprised of a dichroic mirror D and a total reflecting mirror M which are laminated interposing a transparent layer may not be limited to what has been shown in the present example.

Methods of making the color separation device according to the present invention, comprising the reflector element comprised of a dichroic mirror D and a total reflecting mirror M which are laminated interposing a transparent layer, have been mentioned in the above first to fourth examples, but will be described below in an orderly manner.

First, in order to prepare the reflector element comprised of a dichroic mirror D and a total reflecting mirror M which are laminated interposing a transparent layer, the dichroic mirror D, the transparent layer and the total reflecting mirror M may be laminated in this order on a transparent substrate or a prism. The transparent layer may be formed of an air layer, a resin, glass, an inorganic material produced by CVD or vacuum deposition, $SiO_2$, or $SiN_x$, and may be prepared by a method such as coating, CVD, vacuum deposition, sputtering, insertion of a transparent sheet-like material, or insertion of a spacer.

The dichroic mirror D and total reflecting mirror M may be formed by film formation on each of the both sides of a transparent sheet made of glass or the like. Such a transparent sheet may be stuck on the prism or the like so that its flatness can be improved.

Alternatively, the dichroic mirror D may be formed on the transparent substrate or on the prism, and a transparent sheet such as a glass sheet on one side of which the total reflecting mirror M has been formed may be stuck thereon.

Still alternatively, the dichroic mirror D may be formed on one of two transparent substrates or prisms and the total reflecting mirror M on the other of them so that the two transparent substrates or prisms may be adhered interposing a spacer in the manner that the dichroic mirror D and the total reflecting mirror M may face each other. The spacer includes beads, fibers, small-gauge wires, and transparent sheets such as glass sheets. Here, the part corresponding to the transparent layer may be formed of an air gap, or may be filled with a resin such as a UV-curable resin.

Incidentally, the angle of incidence on the dichroic mirror D may be any degrees, but may preferably be $30°$, $45°$ or $60°$ in view of the readiness for its setting. It is most preferably be $45°$.

The CCD line sensor 7 provided with a plurality of sensors in an integral form may preferably be comprised of a single tip or a single package. In the case when three or more line sensors are provided in an integral form, the spaces between the line sensors may preferably be equal, but may not necessarily be equal.

As described above, according to the present invention, the color separation device is formed of the reflector element comprised of a dichroic mirror D and a total reflecting mirror M which are laminated interposing a transparent layer. Thus, it can be more readily manufactured than a device comprising a plurality of dichroic mirrors laminated interposing a plurality of transparent layers. In addition, such a color separation device is provided between an image pick-up sensor having a plurality of line sensors integrally formed, respectively corresponding to separated colors, and an image-forming lens system. Thus, it is unnecessary to provide a image-forming lens system or a image pick-up sensor for each separated color, so that the constitution of an apparatus can be simplified and hence its adjustment can be operated in a simplified manner.

When the color separation device is equipped with two kinds of reflector elements, it becomes possible to separate a color image into the three primary colors and to read an image for each of the three primary colors by the use of three line sensors. In addition, an increase in the kinds of reflector elements makes it easy to answer an increase in the number of colors to be separated.

Moreover, when the transparent layers that constitute the reflector elements have the same thickness, it becomes possible to more readily manufacture the color separation device and also it becomes possible to make the separated colors emergent in the form of parallel light rays.

A first preferred embodiment of the present invention as described above will be described below mainly in respect of the color separation device. In the present example, an image reader by which a color image is scanned and read is so designed that the color separation device is disposed at the back of an image-forming lens system and color-separated images are respectively received on an image sensor equipped with line sensors in an integral form, corresponding to the respective colors.

Fig. 22 illustrates a fifth example according to such a first preferred embodiment of the present invention. In Fig. 22, a prism 21 is a column-like prism elongated in the direction vertical with respect to the plane of the drawing. It has a parallelogramic transverse section in which its interior angles are $\theta$, $180°-\theta$, $\theta$ and $180°-\theta$ in order ($0° < \theta < 90°$). In the present example, it is set to be $45°$.

Reflector elements (a first reflector element and a second reflector element) each comprising a dichroic mirror D, a transparent layer T and a total reflecting mirror M which are laminated in this order are provided on both of opposed sides, respectively, of the prism 21 having such a parallelogramic transverse section. On the outsides of the respective total reflecting mirrors M, plate-like prisms (glass plates) 22 are respectively superposed.

The above transparent layer T is provided to have a thickness of 99 $\mu$m, and to have a refractive index of 1.5 which is substantially the same as that of the prism 21. The thickness of each transparent layer T is set depending on the angle of incidence $\theta$ and the necessary distance between parallel rays of light having been color-separated.

The dichroic mirror D1 of the first reflector element (hereinafter "the first dichroic mirror D1"), provided on the side on which the light of a color image is first incident, is so designed as to reflect only the wavelength of cyan color and passes the wavelength other than that (i.e., wavelength of red color). The dichroic mirror D2 of the second reflector element (hereinafter "the second dichroic mirror D2"), on which the light separated into two colors through the above first dichroic mirror D1 is incident, is so designed as to reflect only the wavelength of blue color and passes the wavelength other than that (i.e., wavelength of yellow color). Thus, the cyan light reflected on the first dichroic mirror D1 is separated into blue and green though the second dichroic mirror D2, so that, together with the red color separated first, the light is separated into the three primary colors of red R, green G and blue B.

The process of color separation, however, is by no means limited to the above, and various color separation processes and separated colors can be selected by appropriately selecting the wavelength characteristics of the dichroic mirrors D.

The above color separation device is so positioned that the color image serving as the light to be color-separated is made incident at an angle of incidence of $45°$ which is the same as the included angle $\theta = 45°$ of the parallelo gramic transverse section, with respect to the first dichroic mirror D1 and the first total reflecting mirror M1. Hence, the color image incident on the prism 21 becomes incident at right angles with respect to a side of the prism 21, so that the color image can be prevented from being refracted when the light is incident on the prism 21. Because of the reflector elements disposed in parallel, the parallel light rays reflected on the first dichroic mirror D1 or the first total reflecting mirror M1 and separated into two colors are incident also at an angle of incidence of $45°$ ($= \theta$) with respect to the second dichroic mirror D2, and the parallel rays of light separated into the the three primary colors are emergent also at right angles with respect to the other side of the prism 21.

More specifically, when the light is made incident at right angles with respect to the one side of the prism 21, the angle made between the surface of the first reflector element and the incident light is $90° - \theta$ as is apparent from Fig. 22. Hence, if reversely the angle of incidence is so set as to be $\theta$, it follows that the light is naturally incident at right angles with respect to the one side of the prism 21. The light reflected on the first dichroic mirror D1 and the first total reflecting mirror M1 is incident also at an angle of incidence of $\theta$ with respect to the second dichroic mirror D2 and total reflecting mirror M2 which are disposed in parallel to the first ones. Hence, the light reflected on the second dichroic mirror D2 and total reflecting mirror M2 is emergent at right angles with respect to the other side of the prism 21. Thus, the light incident on the prism 21 and the light emergent therefrom after color separation becomes parallel.

Since the above description is not limited to the case of $\theta = 45°$ of the present example but is applied to an angle $\theta$ in general, the light can be made incident or emergent at right angles with respect to each side of the prism so long as the prism 21 has a parallelogramic transverse section and also has the included angle $\theta$ among the interior angles of such a parallelogramic transverse section, of $0° < \theta < 90°$, and this included angle $\theta$ is equal to the incident angle of the light to be separated, with respect to the reflector element. The light can be thus prevented from being refracted when it is incident on and emergent from the prism 21.

The refractive indexes made to be substantially the same between the mediums present in front of and at the back of a dichroic mirror D make it also possible to prevent light from being refracted when it passes through the dichroic mirror D, and hence the chromatic aberration can be made to little occur because of the effect combined with the incidence and emergence at right angles with respect to the above prism 21. Thus, it is preferred for the transparent layer T to be made of a prism of the same material. However, the transparent layer may alternatively be made of other material such as a resin so long as it has a refractive index close to the prism 21. The chromatic aberration can thereby be better prevented from occurring than the instance where the dichroic mirror D is held between glass and air.

More specifically, if a medium have substantially the same refractive index as that of the transparent layer T is disposed in front of the dichroic mirror D, the refraction that may occur when the light passes through the dichroic mirror D can be prevented and thus the chromatic aberration can be prevented from occurring, but, on the other hand, the light may be refracted because of a difference in the medium (or the refractive index) when it is obliquely incident on the medium disposed in front of the dichroic mirror D. For this reason, the light must be made incident at right angles on the one side of the prism, and the angle of incidence of the light to be color-separated must be $\theta$ with respect to the reflector element comprised of a dichroic mirror layer and a total reflecting mirror layer.

The color image separated into the three primary colors undergoes photoelectric conversion for each separated color by means of a CCD line sensor 7 equipped with three line sensors (the distance between line sensors is 168 $\mu$m in the present example) in an integral form, having color filters corresponding to the three primary colors, respectively. Since there are the light reflected on the dichroic mirror D and the light reflected on the total reflecting mirror M, the differences in length of light paths occur and the focal positions of the three primary colors deviate frontward and backward without regular arrangement on the same plane falling at right angles with respect to the separated light rays. When, however, the color separation is carried out using the reflector elements disposed in parallel as in the present example, the deviation of focal positions because of the differences in length of light paths is in arrangement on the same plane obliquely crossing with respect to the separated light rays (the light reflected on the second dichroic mirror D2 has the most distant focal position). Hence, the CCD line sensor 7 may be disposed at an inclination so as to be in conformity with the above deviation of focal positions, so that the respective three primary colors can be received at the focal positions, bringing about a decrease in doubling or blurs of colors.

When the prism 21 and the transparent layer T have substantially the same refractive index as in the present example, the differences in length of light paths = $2d \cos\theta \times n_1/n_2$, wherein d is a thickness of the transparent layer T, $n_2$ is a refractive index of the prism 21, and $n_1$ is a refractive index at the outside (an air layer) of the color separation device. It is also required that the differences in length of light paths = $S \sin \alpha$, wherein S is a space between line sensors and $\alpha$ is an angle of inclination of sensors. Hence, $\alpha$ = about 33.7° when $\theta$ = 45°, $n_1$ = 1.0, $n_2$ = 1.5, S = 168 $\mu$m, and d = 99 $\mu$m. It therefore follows that the sensor 7 may be disposed at an inclination of 33.7° from the flat position falling at right angles with the separated light rays, so that the respective separated colors can be received at their focal positions.

In the present example, the dichroic mirror D, the transparent layer T and the total reflecting mirror M are laminated on the prism 21, and hence the prism 21 can serve as a reinforcing material even when the transparent layer T is made thin, whereby the reflector element can be prevented from its warpage caused by film stress. In addition, the reflector elements each comprised of a dichroic mirror D, a transparent layer T and a total reflecting mirror M are provided not in an individual form but in an integral form, and hence, stated simply, a work load for the adjustment of positions can be cut in half when compared with an instance in which they are provided in an individual form.

The dichroic mirror D, the transparent layer T and the total reflecting mirror M can be laminated on the prism 21 by, for example, forming the dichroic mirror D on a side of the prism 21, forming the total reflecting mirror M on the plate-like prism 22, and adhering the prism 21 and prism 22 with a spacer interposed between them with a given thickness. Such a spacer includes wires or beads, which may be interposed between them, keeping out of the light path, The prisms 21 and 22 can be adhered by, for example, filling the gap between them with an ultraviolet-curable resin or the like. As an alternative method, a total reflecting mirror M, a transparent layer T and a dichroic mirror D are previously laminated in this order on the plate-like prism 22, which is then adhered to the prism 21. As a still alternative method, without using the prism 22, a thin glass plate on each side of which a total reflecting mirror M and a dichroic mirror D have been formed may be adhered to the prism 21. There are no limitations on the method for their lamination.

The transparent layers T may preferably be in the same thickness in one color separation device, in view of the readiness on the manufacture or the advantage that the distance between color-separated light rays can be made constant. If, however, both the transparent layers T are 1:2 or 2:1 in thickness, the distance between the color-separated light rays can be made constant. Since, however, the deviation of focal points are caused because of the differences in length of light paths as previously described, it is advantageous that the angle of incidence $\theta$ is made larger so that the differences in length of light paths can be made small.

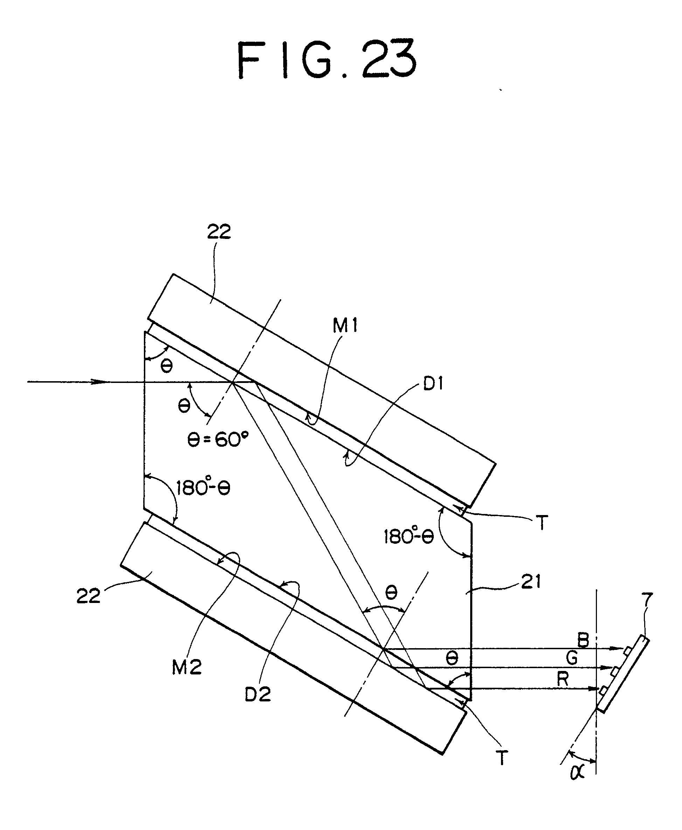

A sixth example in which the angle $\theta$ is 60° will be described below with reference to Fig. 23.

In the present example, a prism 21 has a parallelogramic transverse section in which its included angle $\theta$ is 60° and the interior angles are so set as to be 60°, 120°, 60° and 120° in order. Like the fifth example, reflector elements each comprising a dichroic mirror D, a trans parent layer T and a total reflecting mirror M which are laminated in this order are provided on both of opposed sides, respectively, of such a prism 21. A color separation device that separates a color image into the three primary colors is thus constituted.

The above transparent layer T is provided to have a thickness of 91 $\mu$m, and to have a refractive index of 1.5 which is substantially the same as that of the prism 21.

In the present sixth example also, the angle of incidence with respect to the reflector element, of the light to be color-separated, is set to be 60° which is the same as the above included angle $\theta$. Under such constitution, the light to be color-separated and the color-separated light may be made incident and emerged, respectively, at right angles with respect to the corresponding sides of the prism 21 in the same manner as in the fifth example, and thus the chromatic aberration can be made small.

In the present example also, the differences in length of light paths occur and the focal positions are arranged on the plane obliquely crossing with respect to the separated light rays, and a CCD line sensor 7 is disposed at an inclination with respect to the plane falling at right angles with the separated light so that the respective separated colors can be received at the focal positions. In the present example, however, the angle of inclination of the sensor 7 is 21.1° when similarly calculated but under conditions of $\theta$ = 60° and the transparent layer T thickness = 91 $\mu$m which are different from the fifth example.

In both the fifth and sixth examples, the prism 21 may be formed of the one divided into two sections which are then adhered, but may preferably be so designed that the separated light can pass through the joined surfaces at right angles. The angle $\theta$ is by no means limited to 45° or 60° in the above fifth or sixth example. It, however, is preferred to select angles such as 45° and 60° from the viewpoint of the readiness on the manufacture.

A second preferred embodiment of the present invention will be described below. In the present example also, an image reader by which a color image is scanned and read is so designed that the color separation device is disposed at the back of an image-forming lens system and color-separated images are respectively received on an image sensor equipped with line sensors in an integral form, corresponding to the respective colors.

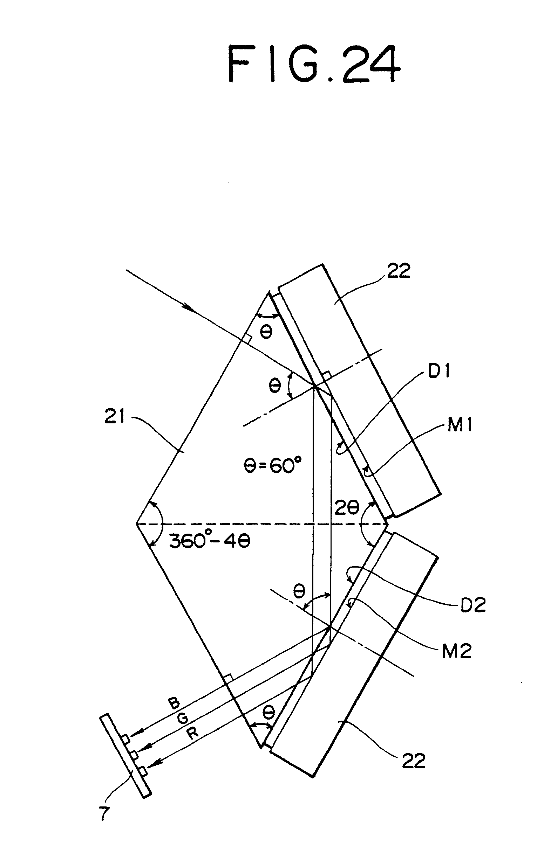

Fig. 24 illustrates a seventh example according to such a second preferred embodiment of the present invention. In Fig. 24, a prism 21 is a column-like prism elongated in the direction vertical with respect to the plane of the drawing. It has a rhombic transverse section as shown in Fig. 24. In the prism 21 having such a rhombic transverse section, its interior angles are 60°, 120°, 60° and 120° in order, satisfying the relationship of $\theta$, $2\theta$, $\theta$ and 360°-4$\theta$, and 0° < $\theta$ < 90°.

Reflector elements (a first reflector element and a second reflector element) each comprising a dichroic mirror D, a transparent layer T and a total reflecting mirror M which are laminated in this order from the prism side are provided on both of adjacent sides, respectively, that form an included angle of 120° (= 2$\theta$) of said prism. On the outsides of the respective total reflecting mirrors M, plate-like prisms (glass plates) 22 are respectively superposed.

The above transparent layer T is provided to have a thickness of 97 $\mu$m, and to have a refractive index of 1.5 which is substantially the same as that of the prism 21. The thickness of each transparent layer T is set depending on the angle of incidence $\theta$ and the necessary distance between parallel rays of light having been color-separated.

The first dichroic mirror Dl, provided on the side on which the light of a color image serving as the light to be color-separated is first incident, is so designed as to reflect only the wavelength of red color and passes the wavelength other than that (i.e., wavelength of cyan color). The second dichroic mirror D2, on which the light separated into two colors through the above first dichroic mirror Dl is incident, is so designed as to reflect only the wavelength of blue color and passes the wavelength other than that (i.e., wavelength of yellow color). Thus, the cyan light passed through the first dichroic mirror D1 and reflected on the total reflecting mirror M is separated into blue and green through the second dichroic mirror D2, so that, together with the red color separated first, the light is separated into the three primary colors of red R, green G and blue B.

The process of color separation, however, is by no means limited to the above, and various color separation processes and separated colors can be selected by appropriately selecting the wavelength characteristics of the dichroic mirrors D.

The above color separation device is so positioned that the color image is made incident at an angle of incidence of 60° (= $\theta$) with respect to the first dichroic mirror D1. Hence, the color image incident on the prism 21 becomes incident at right angles with respect to a side of the prism 21, so that the color image can be prevented from being refracted when the light is incident on the prism 21. The parallel light rays reflected on the first dichroic mirror Dl and separated into two colors are incident also at an angle of incidence of 60° (= $\theta$) with respect to the second dichroic mirror D2, and the parallel rays of light separated into the the three primary colors are emergent also at right angles with respect to the other side of the prism 21.

More specifically, when the light is made incident at right angles with respect to the one side of the prism 21, the angle made between the surface of the first dichroic mirror Dl and the incident light is 90°-$\theta$ as is apparent from Fig. 22. Hence, if reversely the angle of incidence is so set as to be $\theta$, it follows that the light is naturally incident at right angles with respect to the one side of the prism 21. In an imaginary triangle drawn by connecting the two points at which the light is incident on the respective dichroic mirrors D and the vertex of the interior angle 2 $\theta$ of the prism gives, the angle formed by the light reflected on the first dichroic mirror Dl and the surface of the first dichroic mirror Dl is 90°-$\theta$. Hence, the angle formed by the incident light and the surface of the second dichroic mirror D2 also comes to be 90°-$\theta$ and therefore the light is incident at an angle of incidence $\theta$ (= 60°) on the second dichroic mirror D2. When the light is incident at an angle of incidence $\theta$ (= 60°) on the second dichroic mirror D2, the light emergent therefrom is also at right angles with respect to the side of the prism 21.

Since the above description is not limited to the case of the angle 60° of the present example but is applied to an angle $\theta$ in general, the light can be made incident or emergent at right angles with respect to each side of the prism so long as the prism 21 has the four interior angles of $\theta$, $2\theta$, $\theta$ and 360°-4$\theta$ in order (0° < $\theta$ < 90°) and the reflector elements each comprised of a dichroic mirror D, a transparent layer T and a total reflecting mirror M laminated in this order are provided on the adjacent two sides that form an included angle 2$\theta$. The light can be thus prevented from being refracted when it is incident on and emergent from the prism 21.

The refractive indexes made to be substantially the same between the mediums present in front of and at the back of a dichroic mirror D make it also possible to prevent light from being refracted when it passes through the dichroic mirror D, and hence the chromatic aberration can be made to little occur because of the effect combined with the incidence and emergence at right angles with respect to the above prism 21. Thus, it is preferred for the transparent layer T to be made of a prism of the same material. However, the transparent layer may alternatively be made of other material such as a resin so long as it has a refractive index close to the prism 21. The chromatic aberration can thereby be better prevented from occurring than the instance where the dichroic mirror D is held between glass and air.

If a medium have substantially the same refractive index as that of the transparent layer T is disposed in front of the dichroic mirror D, the refraction that may occur when the light passes through the dichroic mirror D can be prevented and thus the chromatic aberration can be prevented from occurring, but, on the other hand, the light may be refracted because of a difference in the medium (or the refractive index) when it is obliquely incident on the medium disposed in front of the dichroic mirror D. For this reason, the light must be made incident at right angles on the one side of the prism, and the angle of incidence must be $\theta$ with respect to the dichroic mirror D.

The color image separated into the three primary colors undergoes photoelectric conversion for each separated color by means of a CCD line sensor 7 equipped with three line sensors (the distance between line sensors is 168 $\mu$m in the present example) in an integral form, having color filters corresponding to the three primary colors, respectively. Since there are the light reflected on the dichroic mirror D and the light reflected on the total reflecting mirror M, the differences in length of light paths occur and, in the color separation device as shown in Fig., 24, the focal position of the intermediate green light held between red and blue is closer than the focal positions of others, so that all the three primary colors can not be received at their focal positions even when the sensor 7 is disposed in the direction falling at right angles with light rays. Since, however, there is no difficulty in practice if they are within the focal depth, the sensor device may be positioned at an intermediate focal position so that the light can be received at least within the focal depth.

The differences in length of light paths = 2d cos$\theta$ x $n_1/n_2$, wherein d is a thickness of the transparent layer T, $n_2$ is a refractive index of the prism 21, and $n_1$ is a refractive index at the outside (an air layer) of the color separation device. Hence, the differences in length of light paths come to be about 65 $\mu$m when d = 97 $\mu$m, $n_2$ = 1.5, $n_1$ = 1.0, and $\theta$ = 60°. It therefore follows that the sensor 7 may be disposed within a focal depth of ± 33 $\mu$m in the present example.

In the present example, the dichroic mirror D, the transparent layer T and the total reflecting mirror M are laminated on the prism 21, and hence the prism 21 can serve as a reinforcing material even when the transparent layer T is made thin, whereby the reflector element can be prevented from its warpage caused by film stress. In addition, the reflector elements each comprised of a dichroic mirror D, a transparent layer T and a total reflecting mirror M are provided not in an individual form but in an integral form, and hence, stated simply, a work load for the adjustment of positions can be cut in half when compared with an instance in which they are provided in an individual form.

The dichroic mirror D, the transparent layer T and the total reflecting mirror M can be laminated on the prism 21 by, for example, forming the dichroic mirror D on a side of the prism 21, forming the total reflecting mirror M on the plate-like prism 22, and adhering the prism 21 and prism 22 with a spacer interposed between them with a given thickness. Such a spacer includes wires or beads, which may be interposed between them, keeping out of the light path, The prisms 21 and 22 can be adhered by, for example, filling the gap between them with an ultraviolet-curable resin or the like. As an alternative method, a total reflecting mirror M, a transparent layer T and a dichroic mirror D are previously laminated in this order on the plate-like prism 22, which is then adhered to the prism 21. As a still alternative method, without using the prism 22, a thin glass plate on each side of which a total reflecting mirror M and a dichroic mirror D have been formed may be adhered to the prism 21. There are no limitations on the method for their lamination.

The transparent layers T may preferably be in the same thickness in one color separation device, in view of the readiness on the manufacture or the advantage that the distance between color-separated light rays can be made constant. If, however, both the transparent layers T are 1:2 or 2:1 in thickness, the distance between the color-separated light rays can be made constant. Since, however, the deviation of focal points are caused because of the differences in length of light paths as previously described, it is advantageous that the thickness of the transparent layer T is made thinner and the angle of incidence $\theta$ is made larger so that the differences in length of light paths can be made small.

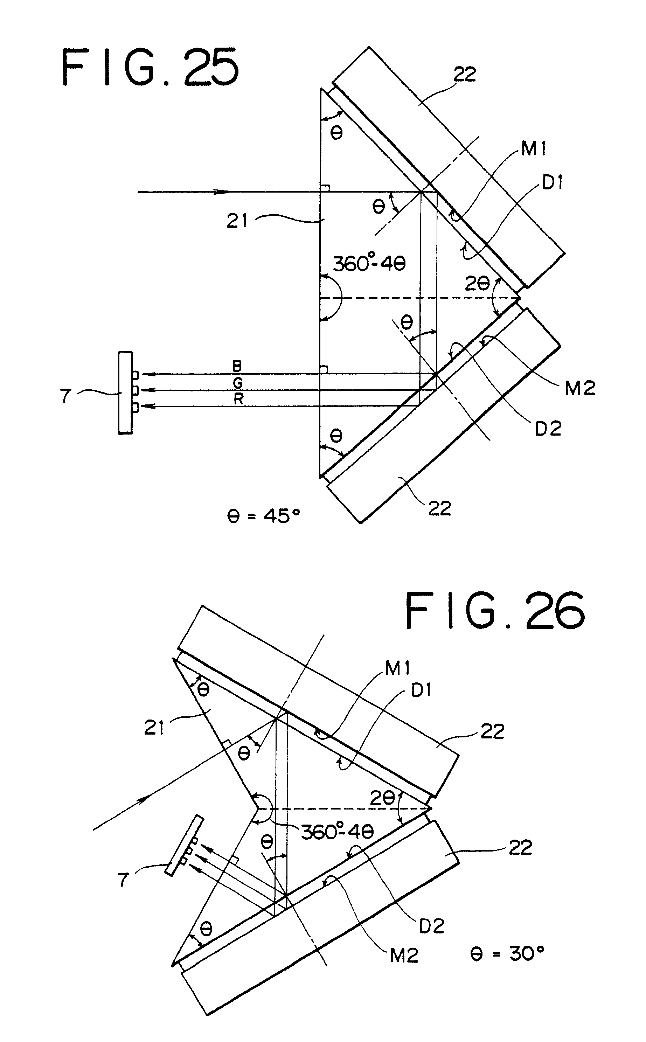

An eighth example in which the angle θ is 45° will be described below with reference to Fig. 25.

When θ is 45°, a quadrangle whose four interior angles formed by four sides are θ, 2θ, θ and 360°-4θ in order gives 360°-4θ = 180°, and hence in practice it results in a triangle having interior angles of 45°, 90° and 45° as shown in Fig. 25. Thus, in the present eighth example, only the shape of the prism is different and other constitution is the same as that in the seventh example.

In the eighth example as shown in Fig. 25, the device is so constituted that the light is incident on the dichroic mirror D at an angle of incidence θ = 45°, whereby the light incident on and emergent from the prism 21 falls at right angles with respect to the side of the prism 21. Thus, in combination with the effect of making mediums (refractive indexes) similar at the back and in front of the dichroic mirror D, the refraction can be prevented from occurring at the boundary layer that constitutes a reflector element, and also the chromatic aberration can be made small.

In the eighth example, the three primary colors are received on three line sensors, respectively, equipped in a CCD line sensor 7 at a space of 168 μm between lines.

Hence, the transparent layer T is made to have a thickness of 119 μm so that the distance between separated light rays can be adjusted. This causes the differences of 112 μm in length of light paths. Hence, if there is a focal depth or magnification deviation tolerance depth of ± 56 μm, the sensor may be disposed at an intermediate focal position, whereby the influence of the differences in length of light paths can be prevented.

In a ninth example shown in Fig. 26, the angle θ is set to be 30°, and a column-like prism 21 has a quadrangular transverse section whose interior angles are 30°, 60°, 30° and 240°. In this example also, the device is so constituted that the light is incident on the dichroic mirror D at an angle of incidence 30° (= θ), whereby the light incident on and emergent from the prism 21 falls at right angles with respect to the side of the prism 21. Thus, the refraction at the sides of the prism and the refraction at the time the light passes though the dichroic mirror D can be prevented, and an image with a small chromatic aberration can be obtained.

In the ninth example, the three primary colors are received on three line sensors, respectively, equipped in a CCD line sensor 7 at a space of 168 μm between lines. Hence, the transparent layer T is made to have a thickness of 168 μm so that the distance between separated light rays can be adjusted. This causes the differences of 194 μm in length of light paths. Hence, if there is a focal depth or magnification deviation tolerance depth of ± 97 μm, the sensor may be disposed at an intermediate focal position, whereby the influence of the differences in length of light paths can be prevented.

In all the above seventh to ninth examples also, the prism 21 may be formed of the one divided into two sections which are then adhered. The angle θ is by no means limited to 30°, 45° or 60° in the above seventh to ninth examples. It, however, is preferred to select angles among 30°, 45° and 60° from the viewpoint of the readiness on the manufacture.

As described above, according to the above preferred embodiments of the present invention, the color separation device is equipped with two sets of reflector elements in an integral form, and hence a work load for the adjustment of positions and angles can be reduced. At the same time, since the reflector elements are formed on the sides of a prism, the prism can serve as a reinforcing material and thus the reflector elements can be prevented from being warped. In addition, the light incident on and emergent from the prism at right angles with respect to the sides of the prism and also the mediums in front of and at the back of a dichroic mirror layer have substantially the same refractive index, so that the light can be prevented from being refracted and the chromatic aberration can be made small.

Moreover, since the respective focal positions of color-separated light rays are deviated in a linear fashion, a sensor equipped with sensors for the respective separated colors in an integral form is disposed at an inclination. Thus, the respective separated colors can be received at their focal positions.

## Claims

1. An image reader for reading a color image by color separation, comprising;
an image pick-up sensor having a plurality of line sensors respectively corresponding to separated colors,
an image-forming lens system and
a color separation device comprising a reflector element comprised of a dichroic mirror and a total reflecting mirror which are laminated interposing a transparent layer, wherein
said color separation device is provided between said image pick-up sensor and said image-forming lens system.

2. The image reader according to Claim 1, wherein;
said color separation device comprises two kinds of reflector elements, which separate the color image into the three primary colors, and;

said image pick-up sensor is equipped with three line sensors in an integral form which correspond respectively to the three primary colors.

3. The image reader according to Claim 2, wherein the transparent layers that respectively constitute said two kinds of reflector elements have the same thickness.

4. The image reader according to Claim 1, 2 or 3 wherein an angle of incidence on the dichroic mirror D is selected from the group consisting of $30°$, $45°$ and $90°$.

5. The image reader according to Claim 1, 2 or 3 wherein said color separation device comprises;

a column-like prism having a parallelogramic transverse section in which an included angle $\theta$ of its interior angles is $0° < \theta < 90°$; and

reflector elements provided in pair on both of opposed sides of said prism, respectively, and each comprising a dichroic mirror, a transparent layer and a total reflecting mirror which are provided in this order from the prism;

the light to be color-separated being made incident at an angle of incidence $\theta$ on one of reflective surfaces of said reflector elements.

6. The image reader according to Claim 5, wherein said transparent layer is formed of a material having substantially the same refractive index as said prism.

7. The image reader according to Claim 5, wherein the angle $\theta$ is $45°$ or $60°$.

8. The image reader according to Claim 1, 2 or 3 wherein said color separation device comprises;

a column-like prism having a quadrangular transverse section in which its interior angles are $\theta$, $2\theta$, $\theta$ and $360°-4\theta$ in order, and $0° < \theta < 90°$; and

reflector elements provided in pair on two adjacent sides, respectively, that form an included angle $2\theta$ of said prism, and each comprising a dichroic mirror, a transparent layer and a total reflecting mirror which are provided in this order from the prism;

the light to be color-separated being made incident at an angle of incidence $\theta$ on one of reflective surfaces of said reflector elements.

9. The image reader according to Claim 6 or 8 wherein the angle $\theta$ is selected from $30°$, $45$ and $60°$.

10. The image reader according to Claim 6 or 8, wherein said angle $\theta$ is $45°$ so that said column-like prism

a triangular transverse section.

11. The imaoe. reader according to Claim 8, 9 or 10 wherein said transparent layer is formed of a material having substantially the same refractive index as said prism.

# FIG. 1

# FIG. 2

# FIG.3

# FIG.4

# FIG.5

# FIG.6

# FIG.7

# FIG.8

# FIG.9

# FIG.10

# FIG.11

# FIG.12

C/R

C    R

B(G)
G(B)
R

B/Y or G/M

# FIG.13

M/G

M    G

R(B)
B(R)
G

R/C or B/Y

# FIG.14

Y/B

Y    B

R(G)
G(R)
B

R/C or G/M

F I G. 15

F I G. 16

F I G. 17

# FIG.18

Focal point

# FIG.19

Dichroic performance

Wavelength

EP 0 416 927 A2

# FIG.20

# FIG.21

# F I G.22

22

M1

D1

θ

θ

T

21

180°-θ

180°-θ

θ=45°

θ

B

G

7

22

R

θ

M2

θ

α

D2

T

# F I G. 23

# FIG.24

# FIG. 25

$\theta = 45°$

# FIG. 26

$\theta = 30°$